# EUROPEAN PATENT SPECIFICATION

(11) **EP 3 104 302 B1**
(45) Date of publication and mention of the grant of the patent: **23.05.2018**
(21) Application number: 15171210.6
(22) Date of filing: 09.06.2015
(51) Int. Cl.: G06K 9/00

(54) **A METHOD OF DIGITALISING ENGINEERING DOCUMENTS**
VERFAHREN ZUR DIGITALISIERUNG TECHNISCHER DOKUMENTE
PROCÉDÉ DE NUMÉRISATION DE DOCUMENTS D'INGÉNIERIE

(43) Date of publication of application: 14.12.2016
(73) Proprietor: ABB Schweiz AG, 5400 Baden (CH)
(72) Inventor: ARROYO, Esteban, 20099 Hamburg (DE); FAY, Alexander, 22149 Hamburg (DE); HOERNICKE, Mario, 76829 Landau (DE)
(74) Representative: Helin, William

(56) References cited:
- EP-A1- 1 876 553
- US-A1- 2010 250 622
- CHIEW-LAN TAI ET AL: "An object-oriented progressive-simplification-based vectorization system for engineering drawings: model, algorithm, and performance", IEEE TRANSACTIONS ON PATTERN ANALYSIS AND MACHINE INTELLIGENCE, IEEE COMPUTER SOCIETY, USA, vol. 24, no. 8, 1 August 2002 (2002-08-01) , pages 1048-1060, XP011094694, ISSN: 0162-8828, DOI: 10.1109/TPAMI.2002.1023802
- DE PARAMITA ET AL: "A New Approach to Detect and Classify Graphic Primitives in Engineering Drawings", 2014 FOURTH INTERNATIONAL CONFERENCE OF EMERGING APPLICATIONS OF INFORMATION TECHNOLOGY, IEEE, 19 December 2014 (2014-12-19), pages 243-248, XP032741590, DOI: 10.1109/EAIT.2014.33 [retrieved on 2015-02-27]
- SERGEY V. ABLAMEYKO ET AL: "Recognition of engineering drawing entities: review of approaches", INTERNATIONAL JOURNAL OF IMAGE AND GRAPHICS, vol. 7, no. 4, 1 October 2007 (2007-10-01) , pages 709-733, XP055228784, SG ISSN: 0219-4678

## Description

### TECHNICAL FIELD

The present disclosure relates to the field of information management in engineering and modernisation projects.

### BACKGROUND

State-of-the-art approaches for digitalization of legacy documentation have mainly focused on the conversion of text-based records. Typical examples of such documents include payment invoices, insurance certificates, and books. The field of computer vision dedicated to the analysis of text is Optical Character Recognition (OCR). OCR methods are aimed at the conversion of scanned or photographed characters into machine-encoded text. Identified text can be subsequently input to digital systems or databases for further use or exported as digital documents which can be electronically edited and searched.

The complexity of the text recognition process increases when considering the presence of graphics within analysed documentation. A number of authors have reported on extraction of text annotations from mixed text-graphics documents. The publications "A robust algorithm for text textbox string separation from mixed text-graphics images" by L. Fletcher et al., IEEE Trans. PAMI 10(6), pp. 90-918, 1988 and "Segmentation of Text and Graphics from Document Images" by S. Chowdhury et al., Document Analysis and Recognition, ICDAR. Ninth International Conference on, vol.2, pp.619-623, 2007 disclose methods for text annotation separation in images with annotations in multiple alignments. The publication "Segmentation and recognition of dimension texts in engineering documents" by J. Gao et al., ICDAR95, pp. 528-531, 1995 introduced a raster-based method for the identification of string boxes whilst in the paper "Extraction of text boxes from engineering drawings" by I. Chai et al., Proc. SPIE/IS&T Symposium on Electronic Imaging Science and Technology, Conference on Character Recognition and Digitizer Technologies, SPIE Vol. 1661, pp. 38-49, 1992 it is disclosed a vector-based algorithm for the same task. Several disclosures addressed the recognition of text from engineering drawings, most of them focusing this procedure as an initial step for graphics vectorization, raster-to-vector conversion.

Other works have focused on the concrete analysis of symbols yielding significant contributions to the field of Optical Symbol Recognition (OSR). Important research on OSR has been carried out in mechanical engineering for the conversion of legacy design documents. Most of those works concentrate on the vectorization of graphic forms such that 2D or 3D graphical models can be generated, as disclosed in "Celesstin: CAD Conversion of Mechanical Drawings", by P. Vaxiere et al., IEEE Computer, 25(7): 46-54, 1992.

In the publication "A System for Recognizing a Large Class of Engineering Drawings" by Yu et a., IEEE Transactions on Pattern Analysis and Machine Intelligence, 19(8):868-890, 1997 it is disclosed a system for recognizing a broad range of engineering documents including logical diagrams, electrical circuits, and P&IDs. The proposed recognition process is based on edge detection methods and it comprises two stages: (a) segmentation based on domain-independent rules and b) recognition of graphics and error handling through the application of domain specific knowledge. Capabilities for text identification (tags) are not deployed by the approach which prevents the automatic association of identified items and their tag identifiers. The recognition procedure does not support geometric scaling and no statements regarding capabilities for the identification of rotated and occluded symbols are given. As output, the system generates a plain netlist (text file) containing identified symbols and their connections.

In the commercial sector, few companies have developed tools and offer support for the digitalization of legacy documentation in process industries. Radial SG, for instance, offers digitalization services for engineering documents available on paper. Their solution VIEWPORT implements OCR to extract component lists from Piping and Instrumentation Diagrams (P&ID). Basic OSR is also supported but the solution is neither capable of determining the connectivity of the plant assets nor deriving a structural digital model from the recognized symbols. In general, the basic OSR capabilities deployed by VIEWPORT are limited to visualization purposes.

CHIEW-LAN TAI ET AL: "An object-oriented progressive-simplification-based vectorization system for engineering drawings: model, algorithm , and performance', IEEE TRANSACTIONS ON PATTERN ANALYSIS AND MACHINE INTELLIGENCE. IEEE COMPUTER SOCIETY, USA, vol. 24, no. 8, 1 August 2002 (2002-08-01), pages 1048-1060, ISSN: 0162-8828, DOI: 10.1109/ ITPAMI.2002.1023802 discloses a method of imitating the way humans read engineering drawings by means of a one- phase object-oriented vectorization model that recognizes each class of graphic objects from their natural characteristics. Each ground truth graphic object is recognized directly in its entirety at the pixel level.

The raster image is progressively simplified by erasing recognized graphic objects to eliminate their interference with subsequent recognition. To evaluate the performance of the proposed model, we present experimental results on real-life drawings and quantitative analysis using third party protocols. The evaluation results show significant improvement in speed and recognition rate.

EP 1 876553 A1 discloses a method for generating process graphics for an industrial process, comprising the following steps: recording a digital image of a graphic in the form of a sketch drawn free-hand by a user, said sketch representing an engineering process element into a computing device, processing the digital image to provide an enhanced process graphic element, and identifying the sketch as at least one process graphic element by using at least a library providing information helping to interpret said sketch and geometrical sketch elements.

DE PARAMITA ET AL: "A New Approach to Detect and Classify Graphic Primitives in Engineering Drawings", 2014 FOURTH INTERNATIONAL CONFERENCE OF EMERGING APPLICATIONS OF INFORMATION TECHNOLOGY, IEEE, 19 December 2014 (2014-12-19), pages 243-248, DOI: 10.1109/EAIT.2014.33 discloses a method to recognize and classify graphics in engineering drawing. The method consists of skeletonizing the input image, followed by segmentation oflines, arcs, and circles. Extracted line segments are classified into object lines, centerlines, dashed lines, and section lines, along with detection of arrowheads attached with lines and arcs. The stages of segmentation and classification are based on novel ideas of dominant chain code in digital geometry, unreliable area, and real-geometric analysis.

US 2010/250622 A1 discloses a method ofautomatic generation ofa system specification description (SSD) file from a diagram of an electrical installation, the diagram comprising conventional symbols representing the electrical elements of the said installation and attributes representing the specific electrical characteristics of each electrical element. This method includes the following steps: identifying the conventional symbols from an image of the said electrical diagram, associating the identified type signals with known entities, identif4ng, from the image, the functional blocks, the graphic instances that represent each conventional symbol, the attributes associated with each conventional symbol, and the topology of the electrical connections of each conventional symbol, associating a standard label with each identified conventional symbol, generating a correspondence table containing each identified symbol and the corresponding standard label; and storing in an SSD type file the said correspondence table and the electrical topology of the identified conventional symbols.

SERGEY V. ABLAMEYKO ET AL: "Recognition of engineering drawing entities: review of approaches", INTERNATIONAL JOURNAL OF IMAGE AND GRAPHICS, vol. 7, no. 4, 1 October 2007 (2007-10-01), pages 709-733, SG ISSN: 0219-4678, discloses review algorithms for the recognition of engineering drawing (ED) entities, especially dimensions and crosshatching areas. For the recognition of dimensions, it is analysed how dimension texts can be separated from graphics and how arrowheads of dimension lines are recognized.

### SUMMARY

In view of the above, an object of the present disclosure is to solve, or at least mitigate, the problems of the prior art.

Hence, according to a first aspect of the present disclosure there is provided a method of digitalising engineering documents describing a plant topology, wherein the method comprises obtaining a digital image of the engineering documents, which digital image comprises: a plurality of objects, each object being one of a plurality of types of non-parametric symbols which are characterised by multi-curve forms, each type of non-parametric symbol representing a unique plant asset class, or one of a plurality of types of first parametric symbols which are characterised by a single-curve form, each type of first parametric symbol representing a unique plant asset class, second type of parametric symbols representing connections between the objects, and text annotations classifying and identifying each object; identifying the non-parametric symbols by comparing them with reference non-parametric symbols, and based on the identifying assigning to each identified non-parametric symbol a plant asset class, determining the coordinates of the non-parametric symbols in the digital image, identifying the first parametric symbols, and based on the identifying assigning to each identified first parametric symbol a plant asset class, determining the coordinates of the first parametric symbols in the digital image, generating a search window for each identified non-parametric symbol, wherein each search window is positioned based on the coordinates of the corresponding identified non-parametric symbol, assigning to each identified non-parametric symbol a text annotation contained in the corresponding search window, wherein in case there are more than one text annotations within a search window, the assigning involves selecting that text annotation contained in the search window which includes a character that corresponds to the plant asset class of the corresponding non-parametric symbol, generating a search window for each identified first parametric symbol, wherein each search window is positioned based on the coordinates of the corresponding identified first parametric symbol, assigning to each identified first parametric symbol a text annotation contained in the corresponding search window, wherein in case there are more than one text annotations within a search window, the assigning involves selecting that text annotation contained in the search window which includes a character that corresponds to the plant asset class of the corresponding first parametric symbol, determining connections between the objects by detecting the second parametric symbols and by determining their proximity to the objects, classifying the second parametric symbols, each second parametric symbol being classified based on the plant asset classes of the objects it connects to or based on the text annotations assigned to the objects it connects to, and generating a model of the plant topology based on the non-parametric symbols, the first parametric symbols, the text annotations and the second parametric symbols.

By means of the assignment of the text annotations to corresponding non-parametric symbols and first parametric symbols and by classifying the second parametric symbols, digitalisation that includes all information of an engineering document may be obtained.

The method is applicable for the digitalization of graphic engineering documents, specifically Piping & Instrumentation Diagrams (P&IDs). The use of the method proposed herein can potentially increase the efficiency of reengineering steps and is particularly relevant in brownfield projects within a broad range of industries such as chemical, pharmaceutical, oil & gas, pulp & paper, total power systems, and process automation.

Most current methods focus on the generation of CAD models through the analysis of mechanical drawings. The present method addresses the conversion of a wider range of connectivity diagrams and graphical process descriptions which are key-documents for reengineering projects in process industry. It combines geometric and semantic techniques to identify the connectivity between graphical symbols and assign specific connectivity types. The method further focusses on the derivation of high-level digital models which can be automatically used for reengineering and operational tasks. Furthermore, the use of this invention does not require high expertise. The digitalization of engineering documents can be performed by the user without the need for hiring external companies for the task, thereby resulting in significant savings.

According to one embodiment the steps of assigning involve utilising an OCR algorithm to identify the text annotations.

According to one embodiment the steps of identifying the non-parametric symbols and the first parametric symbols involves utilising an OSR algorithm, and the detecting of the second parametric symbols involves utilising an OSR algorithm.

According to one embodiment the step of identifying the non-parametric symbols further includes removing the non-parametric symbols from the digital image when they have been identified.

According to one embodiment the step of identifying the first parametric symbols further includes removing the first parametric symbols from the digital image when they have been identified.

According to one embodiment the step of determining the connections involves removing each second parametric symbol from the digital image when a corresponding connection has been determined.

According to one embodiment the step of identifying the non-parametric symbols involves rotating a non-parametric symbol relative to a reference non-parametric symbol.

According to one embodiment the rotating is in the range of 0-360 degrees.

According to one embodiment the step of identifying the non-parametric symbols involves scaling a non-parametric symbol relative to a reference non-parametric symbol.

According to one embodiment the scaling is in the range of 50-200 %.

According to one embodiment in the step of identifying the non-parametric symbols, a cover limit is utilised so that matches can be found also when a non-parametric symbol is covered below the cover limit.

One embodiment comprises assigning unique identifiers to the second parametric symbols.

One embodiment comprises generating an intermediate model of the plant topology prior to the step of generating the model of the plant topology, wherein the intermediate model of the plant topology includes a connectivity matrix describing connections between the objects by means of the classified second type of parametric symbols, and a coordinates table with the coordinates of the objects, and wherein the model of the plant topology is generated based on the intermediate model.

According to one embodiment the model of the plant topology is an object oriented model.

According to a second aspect of the present disclosure there is provided a computer program for digitalising engineering documents describing a plant topology, wherein the computer program comprises computer code which, when run on a processing unit of digitalisation device, causes the digitalisation device to obtain a digital image of the engineering documents, which digital image comprises a plurality of objects, each object being one of a plurality of types of non-parametric symbols which are characterised by multi-curve forms, each type of non-parametric symbol representing a unique plant asset class, or one of a plurality of types of first parametric symbols which are characterised by a single-curve form, each type of first parametric symbol representing a unique plant asset class, second type of parametric symbols representing connections between the objects, and text annotations classifying and identifying each object; identify the non-parametric symbols by comparing them with reference non-parametric symbols, and based on the identifying assign to each identified non-parametric symbol a plant asset class, determine the coordinates of the non-parametric symbols in the digital image, identify the first parametric symbols, and based on the identifying assign to each identified first parametric symbol a plant asset class, determine the coordinates of the first parametric symbols in the digital image, generate a search window for each identified non-parametric symbol, wherein each search window is positioned based on the coordinates of the corresponding identified non-parametric symbol, assign to each identified non-parametric symbol a text annotation contained in the corresponding search window, wherein in case there are more than one text annotations within a search window, the assigning involves selecting that text annotation contained in the search window which includes a character that corresponds to the plant asset class of the corresponding non-parametric symbol, generate a search window for each identified first parametric symbol, wherein each search window is positioned based on the coordinates of the corresponding identified first parametric symbol, assign to each identified first parametric symbol a text annotation contained in the corresponding search window, wherein in case there are more than one text annotations within a search window, the assigning involves selecting that text annotation contained in the search window which includes a character that corresponds to the plant asset class of the corresponding first parametric symbol, determine connections between the objects by detecting the second parametric symbols and by determining their proximity to the objects, classify the second parametric symbols, each second parametric symbol being classified based on the plant asset classes of the objects it connects to or based on the text annotations assigned to the objects it connects to, and generate a model of the plant topology based on the non-parametric symbols, the first parametric symbols, the text annotations and the second parametric symbols.

According to a third aspect of the present disclosure there is provided a computer program product comprising a computer program according the second aspect, and a storage unit on which the computer program is stored.

Generally, all terms used in the claims are to be interpreted according to their ordinary meaning in the technical field, unless explicitly defined otherwise herein. All references to "a/an/the element, apparatus, component, means, etc. are to be interpreted openly as referring to at least one instance of the element, apparatus, component, means, etc., unless explicitly stated otherwise. Moreover, the method steps presented herein do not necessarily have to be carried out in the described order unless explicitly stated so.

### BRIEF DESCRIPTION OF THE DRAWINGS

The specific embodiments of the inventive concept will now be described, by way of example, with reference to the accompanying drawings, in which:
Fig. 1 is a schematic illustration of the composition of engineering documents;
Fig. 2 schematically depicts a digitalisation device for digitalisation of engineering documents;
Figs 3a-b show a simple example of a an engineering document, in particular a P&ID;
Fig. 4 shows a simple example of a connectivity matrix;
Fig. 5 shows a simple example of a model of a plant topology based on the connectivity matrix in Fig 4; and
Fig. 6 shows a flowchart of a method of digitalising engineering documents describing a plant topology.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

The present disclosure describes a method for digitalizing engineering documents based on optical recognition and semantic analysis. The underlying notion of this approach is that certain graphical engineering documents, such as P&IDs, can be converted into object-oriented (OO) models through the systematic recognition of text and symbolic forms, the detection of their connections, and the analysis of their domain-specific connotation. In particular a method which captures the plant topology, connectivity, and annotations of design drawings typically stored on paper or elementary digital formats is disclosed. Such a workflow and its underlying concepts are capable of drastically speeding-up the digitalization of legacy documents.

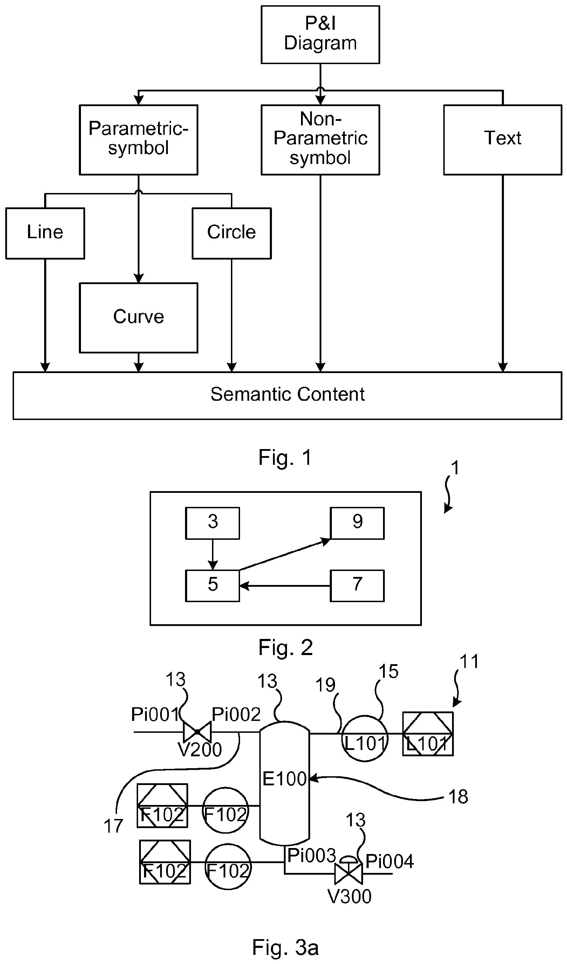

The method relies on the notion that engineering documents are composed of four fundamental elements. These elements are 1) parametric symbols that are symbols that can be characterised by single curve forms such as circles, rectangles, lines and curves, 2) non-parametric symbols that are symbols that can be characterised by multi-curve forms, 3) text annotations, and 4) underlying semantic content, as shown in Fig. 1. The parametric symbols are herein divided into first parametric symbols and second parametric symbols. The first parametric symbols and the non-parametric symbols define objects that represent plant asset classes, for example plant devices or plant processes. The second parametric symbols represent connections between the objects. The second parametric symbols may also be seen to represent plant asset classes, e.g. pipes and wires.

In view of the above this disclosure proposes three main procedures for the conversion execution. 1) Low-level recognition: OSR and OCR for the identification of non-parametric and parametric symbols and text annotations. 2) High-level recognition: Semantic analysis for the enhancement of the recognition procedure and the improvement of expression capabilities for model description. 3) Representation of the captured information as a model of the plant topology, aimed at providing automatic data access and information exchange capabilities.

The methodology presented herein assumes as a starting point of the conversion process that P&IDs are embodied as digital images on raster images. However, legacy documents are typically maintained either on paper or elementary digital formats such as PDF or CAD files. In those cases, preprocessing steps should be taken beforehand. In particular, paper documents are to be scanned and stored as raster files whilst elementary digital documents are to be exported through virtual printing and rasterization, or snapshotting.

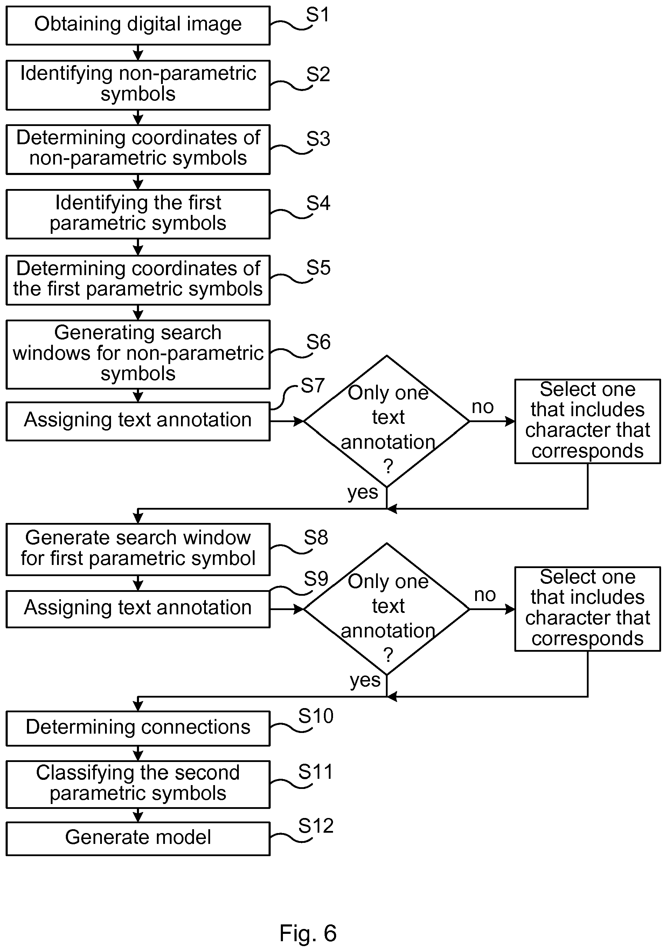

The method of digitalising engineering documents will now be described in more detail with reference to Figs 2-6.

Fig. 2 depicts a block diagram of a digitalisation device 1 configured to digitalise engineering documents describing a plant topology. The digitalisation device 1 comprises an input unit 3 configured to receive a digital image of an engineering document describing a plant topology, a storage unit 7 comprising computer code, a processing unit 5 and an output unit 9, which output unit 9 is configured to communicate with the processing unit 5 and to output a model of the plant topology created by the processing unit 5 based on a digital image of engineering documents. The digitalisation device 1 is configured to digitalise engineering documents according to the methods that will be described in more detail in the following when the computer code stored in the storage unit 7 is run on the processing unit 5.

Fig. 3a shows a simplified example of a digital image 11 of an engineering document in the form of a P&ID. The engineering document describes a plant topology, i.e. the plant devices and their connections, in a schematic manner.

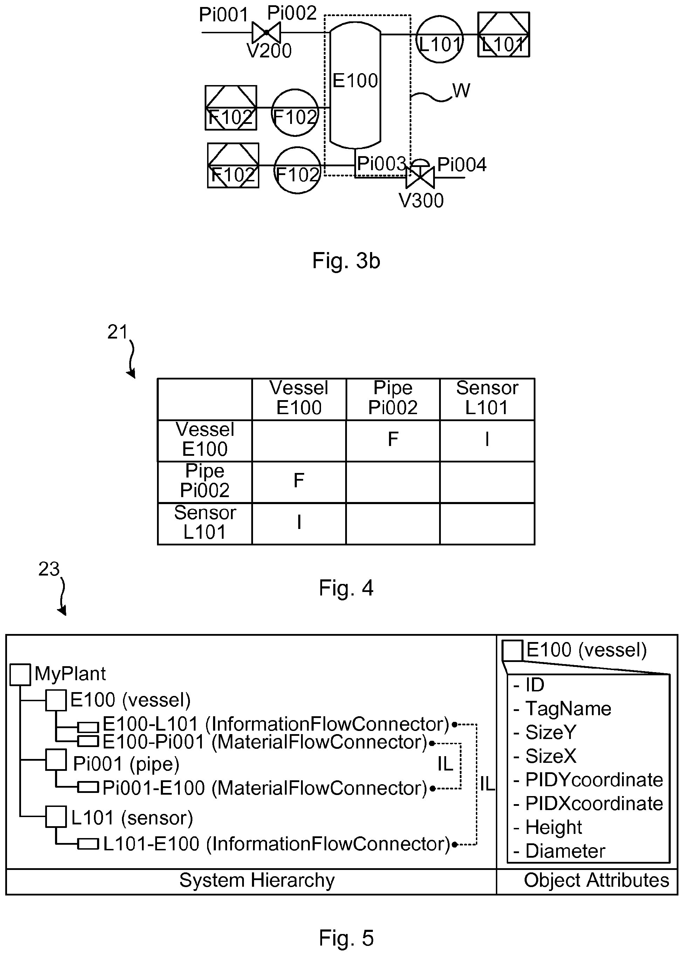

In Fig. 3 for example, there is a vessel E100 connected to a valve V200 by means of a pipe Pi002 and a sensor L101 is connected to the vessel E100. The vessel E100 and the valve V200 are examples of non-parametric symbols 13. The sensor L101 is an example of a first parametric symbol 15. The pipe Pi200 is an example of a second parametric symbol 17. The connection 19 between the vessel E100 and the sensor L101 is another example of a second parametric symbol, in this case not a flow coupling as in the case of the pipe Pi002 but an information link. As will be made clear in the following, the type of connection, e.g. flow coupling or information link, is determined by the digitalisation method, thereby contributing to a full identification of the plant topology presented in an engineering document.

In a step S1 of the digitalisation method, a digital image 11 of an engineering document describing a plant topology is obtained. For the digitalising device 1, the digital image 11 is obtained either by the input unit 3 and delivered to the processing unit 5 or obtained by the processing unit 5 itself for example in the event of a file conversion operation.

At this stage, contours of image contours representing graphic components such as objects, connections, and text annotations are extracted. Such a procedure may be executed based on gradient methods as a step prior to optical recognition.

In a step S2, the non-parametric symbols are identified by comparing them with reference non-parametric symbols. Based on the identifying a plant asset class is assigned to each identified non-parametric symbol. Thus, for example the non-parametric symbol 13 that is the vessel E100 is assigned the plant asset class "vessel". In step S2 OSR may be used to identify the non-parametric symbols 13.

The non-parametric symbols are preferably compared with pre-defined libraries/databases of reference non-parametric symbols accounting for typical non-parametric symbols found within the analysed digital image 11. A predefined library can represent, for instance, plant asset catalogues or sets of symbols commonly used to embody specific plant devices or plant processes. The definition of libraries allow not only for modularity, which in turn results in more efficient search procedures, but also for effective capture and reuse of structural knowledge within different projects. The matching criterion employed at this stage is based on the geometric features of the examined non-parametric symbols.

According to one variation geometric properties may be utilised to guarantee an exhaustive search of possible matches. In particular, three geometric properties may be utilised, namely rotation, scaling and partial overlapping which are cases when part of a non-parametric symbol is partially overlapped by other another object and/or by a text annotation. Thus, the step S2 of identifying the non-parametric symbols may involves rotating a non-parametric symbol relative to a reference non-parametric symbol if necessary. The rotation may preferably be performed in a range of 0 to 360 degrees. The step S2 of identifying the non-parametric symbols may also involve scaling a non-parametric symbol relative to a reference non-parametric symbol if necessary. The scaling may for example be performed in the range of 50-200 % of a non-parametric symbol. Furthermore, in the step S2 of identifying the non-parametric symbols, a cover limit or occlusion limit may be utilised so that matches can be found also when a non-parametric symbol is covered below the cover limit i.e. covered not more than what is defined by the cover limit. Accordingly, cover limits can be defined so that matches can be found despite this condition. Typical cover limit values are defined in the range 0-20%.

Matching scores quantifying the extent of resemblance between found candidates of non-parametric symbols and respective reference non-parametric symbols may be used to define levels of confidence within the identification process.

In a step S3 the coordinates of the non-parametric symbols in the digital image are determined. This procedure may be performed simultaneously with the identification, each time a match is found, i.e. when an object is identified as a non-parametric symbol. The coordinates are stored and optionally the curves representing an identified non-parametric symbol are removed or suppressed from the digital image 11 in order to facilitate the recognition of further objects.

In a step S4 the first parametric symbols 15 are identified. Furthermore, based on the identifying a plant asset class is assigned to each identified first parametric symbol. Thus, for example the first parametric symbol 15 that is the sensor L101 is assigned the plant asset class "sensor". In step S4 OSR may be used to identify the first parametric symbols 15.

It should be noted that steps S2 and S4 may alternatively be performed in opposite order than presented herein, or in parallel.

Recognition methods used in step S4 are capable of finding possible candidates regardless of their size and orientation. Thresholds can be set to define the minimum dimensions of first parametric objects and avoid thereby the misinterpretation of characters as first parametric symbols, e.g. characters O.

In a step S5 the coordinates of the first parametric symbols in the digital image are determined.

As in step S2, the reliability of the recognition process can be adjusted based on calculated matching scores. As a result, coordinates of found objects are stored and their respective curves may be removed or suppressed from the digital image 11.

Based on the notion that the text annotation, or tag identifier, of an object is located in its surrounding area or within it, the coordinates of identified non-parametric objects are used to generate search windows. Hence in a step S6 a respective search window is generated for each identified non-parametric symbol 13. In Fig. 3b one search window W is shown, generated based on the coordinates of the vessel E100. Each search window is positioned in the digital image based on the coordinates of the corresponding identified non-parametric symbol. In particular, each search window is positioned so that it includes the area surrounding the corresponding identified non-parametric symbol. The size of a search window is typically proportional to the dimensions of the identified non-parametric form in question or could be conveniently defined by the user depending upon the considered non-parametric symbol.

In a step S7 a text annotation 18 contained in the corresponding search window is assigned to the identified non-parametric symbol in question. For this purpose, an OCR algorithm searches for text annotation within the search window, finding characters which are collected in a string and assigned as text annotation or tag identifier of the respective object. Thus, for example for the vessel E100 in Fig. 3, the assigned text annotation would be "E100".

In case there are more than one text annotations within a search window, the assigning involves selecting that text annotation contained in the search window which includes a character that corresponds to the plant asset class of the corresponding non-parametric symbol. The character may for example be an alphanumeric character and it may have a predefined position in the text string representing the text annotation. For instance, if the analysed search window surrounds an object A, possible text annotations or tag identifiers are to start with a specific alphabetic character X followed by a specific number of alphanumerical characters YYY which results in a tag of type XYYY. All strings not satisfying such a rule are discarded and consequently a unique tag is assigned to the object. An example of this situation is shown in Fig. 3b, where the search window W for the vessel E100 contains two text annotations, namely E100 and Pi003. Here, the character "E" determines that the text annotation "E100" should be assigned to the non-parametric symbol describing the vessel, and thus that the text annotation Pi003 should be discarded.

In case of doubtful identifications, for instance due to touching characters, the method may trigger a warning notifying the user of the problem. As a final action of this step found text annotations may be removed or suppressed from the digital image to facilitate the identification of remaining objects and text annotations.

In a step S8, a respective search window is generated for each identified first parametric symbol. Similarly to the process explained hereabove, each search window is positioned based on the coordinates of the corresponding identified first parametric symbol.

In a step S9 a text annotation contained in the corresponding search window is assigned to the concerned identified first parametric symbol. In case there are more than one text annotations within a search window, the assigning involves selecting that text annotation contained in the search window which includes a character that corresponds to the plant asset class of the corresponding first parametric symbol. The character may for example be an alphanumeric character and it may have a predefined position in the text string representing the text annotation. A similar OCR search approach is followed here as for the text annotation assignment for non-parametric symbols, i.e. strings are found, nomenclature rules are applied to ensure naming consistency, and warnings may be triggered to inform about doubtful identifications.

In a step S10, connections between the objects 13, 15 are determined by detecting the second parametric symbols and by determining their proximity to the objects 13, 15. The detecting may include assigning a plant asset class to the second parametric symbols. Search windows may also be created based on the coordinates of the second parametric symbols, to thereby assign text annotations to the second parametric symbols, if such text annotations are present. Sometimes, in engineering drawings, lines represent simple connections and are not tagged. Hence, according to one variation, the approach is to assign fictive and unique text annotations or tag identifiers so that lines can be subsequently referenced to by the allocated text annotation. The method may hence include assigning unique identifiers to those second parametric symbols for which no text annotation can be found.

Connections within engineering diagrams are constructed based on polyline arrangements. Hence, the determining of connections requires as a first step to unify contiguous lines so that the second parametric symbols in the form of single links can be identified. At that point, the proximity of such second parametric symbols to objects is verified and the underlying connectivity of the diagram derived.

For the generation of a detailed model of the plant topology, further distinctions between connectivity types are required. For instance, the function and physics of a vessel-sensor link is different to the one of a vessel-pipe connection. The former transports information and it is typically implemented by wires or wirelessly, while the latter carries material, e.g. products, and is usually realized through flow couplings. For several use cases such a distinction is fundamental as in fault detection and diagnosis where root cause analysis is highly dependent on the propagation media of plant disturbances. Accordingly, the connectivity stage implements semantic analysis to refine the definition of specific connection classes. Regardless of whether the same type of lines is used to represent different connections within the P&ID, the semantics of related objects are analysed so that appropriate interfaces and links are created within the respective derived objects. In case of doubtful connectivity detection, e.g. due to the proximity of several objects, according to one variation a warning is triggered.

Hence in a step S11 the second parametric symbols are classified. The classification of each second parametric symbol is based on the plant asset classes of the objects it connects to or based on the text annotation assigned to the respective object it connects to. Thus for example, for the vessel E100 and the sensor L101 which is connected to the vessel E100 by means of the connection 19, either the plant asset classes, i.e. "vessel" and "sensor", is used to determine that the connection 19 must be an information link or the text annotations "E100" and "L101" are used for the classification. In the latter case, the letters "E" and "L" are reserved for different plant asset classes, in this example to vessel and sensor, respectively. Thereby, the type of connection may be determined.

In a step S12 a model 23 of the plant topology is generated based on the non-parametric symbols, the first parametric symbols, the text annotations and the second parametric symbols. This model may for example be an OO model.

One variation may comprise generating an intermediate model 21 of the plant topology prior to step S12. The intermediate model 21 of the plant topology may include a connectivity matrix describing connections between the objects by means of the classified second type of parametric symbols, and a coordinates table with the coordinates of the objects. An example of a connectivity matrix 21 based on the digital image 11 is shown in Fig. 4. As an intermediate model, the connectivity and position of the found objects can be represented by the connectivity matrix and the coordinates table, respectively. The connectivity matrix may have as first row and column the list of recognized objects and some of the second parametric symbols, i.e. those that have a plant asset class assigned to it. These objects and second parametric symbols may be referenced by their plant asset class and text annotation, e.g. vessel E100. The inner entries of the matrix represent the connectivity and classification between the elements in the first row and first column. The class of connection are indicated by distinctive names within the matrix entries, for example F for material flow and I for information flow. In the example in Fig. 4, vessel E100 has a flow material connection to pipe Pi002 and vice versa. Possible representations of the connectivity matrix can for example be embodied on MS Excel spreadsheets or data tables in C# Windows Forms environment.

The model 23 of the plant topology may be generated based on the intermediate model of the plant topology. Based on the information collected by the intermediate model 23 an OO model may be generated in step S12. The procedure starts by creating one item for every entry within the first column of the connectivity matrix. Subsequently, the specific item class and ID are defined based on the object's plant asset class, for instance item class=vessel, ID=E100. Then, interfaces are created by considering the number of connections found for the given item, i.e. non-empty entries within the respective row/column of the connectivity matrix, and corresponding interface classes are defined in accordance with the content of the cells. By way of illustration, for vessel E100 two interfaces are to be created, one of type MaterialFlow (F) and one of type InformationFlow (I). At this point, internal links can be generated connecting related items through consistent interfaces. The process concludes by assigning items attributes as shown in the right-hand illustration in Fig. 5.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. A method of digitalising engineering documents describing a plant topology, wherein the method comprises:
obtaining (S1) a digital image (11) of the engineering documents, which digital image (11) comprises:
- a plurality of objects, each object being one of a plurality of types of non-parametric symbols (13) which are **characterised by** multi-curve forms, each type of non-parametric symbol (13) representing a unique plant asset class, or one of a plurality of types of first parametric symbols (15) which are **characterised by** a single-curve form, each type of first parametric symbol (15) representing a unique plant asset class,
- second type of parametric symbols (17, 17) representing connections between the objects (13, 15), and
- text annotations (18) classifying and identifying each object (13, 15);
identifying (S2) the non-parametric symbols (13) by comparing them with reference non-parametric symbols, and based on the identifying assigning to each identified non-parametric symbol (13) a plant asset class,
determining (S3) the coordinates of the non-parametric symbols (13) in the digital image (11),
identifying (S4) the first parametric symbols (15), and based on the identifying assigning to each identified first parametric symbol (15) a plant asset class,
determining (S5) the coordinates of the first parametric symbols (15) in the digital image (11),
generating (S6) a search window (W) for each identified non-parametric symbol (13), wherein each search window (W) is positioned based on the coordinates of the corresponding identified non-parametric symbol (13),
assigning (S7) to each identified non-parametric symbol (13) a text annotation (18) contained in the corresponding search window (W), wherein in case there are more than one text annotations (18) within a search window (W), the assigning involves selecting that text annotation (18) contained in the search window (W) which includes a character that corresponds to the plant asset class of the corresponding non-parametric symbol (13),
generating (S8) a search window (W) for each identified first parametric symbol (15), wherein each search window (W) is positioned based on the coordinates of the corresponding identified first parametric symbol (15),
assigning (S9) to each identified first parametric symbol (15) a text annotation (18) contained in the corresponding search window (W), wherein in case there are more than one text annotations (18) within a search window (W), the assigning involves selecting that text annotation (18) contained in the search window (W) which includes a character that corresponds to the plant asset class of the corresponding first parametric symbol (15),
determining (S10) connections between the objects (13, 15) by detecting the second parametric symbols (17, 19) and by determining their proximity to the objects (13, 15),
classifying (S11) the second parametric symbols (17, 19), each second parametric symbol (17, 19) being classified based on the plant asset classes of the objects (13, 15) it connects to or based on the text annotations (18) assigned to the objects (13, 15) it connects to, and
generating (S12) a model (23) of the plant topology based on the non-parametric symbols (13), the first parametric symbols (15), the assigned text annotations (18) and the classified second parametric symbols.

2. The method as claimed in claim 1, wherein the steps of assigning (S7, S9) involve utilising an OCR algorithm to identify the text annotations (18).

3. The method as claimed in claim 1 or 2, wherein the steps of identifying the non-parametric symbols (13) and the first parametric symbols (15) involves utilising an Optical Symbol Recognition, OSR, algorithm, and the detecting of the second parametric symbols involves utilising an OSR algorithm.

4. The method as claimed in any of the preceding claims, wherein the step of identifying (S2) the non-parametric symbols (13) further includes removing the non-parametric symbols (13) from the digital image (11) when they have been identified.

5. The method as claimed in any of the preceding claims, wherein the step of identifying (S4) the first parametric symbols (15) further includes removing the first parametric symbols (15) from the digital image (11) when they have been identified.

6. The method as claimed in any of the preceding claims, wherein the step of determining (S10) the connections involves removing each second parametric symbol (17, 19) from the digital image (11) when a corresponding connection has been determined.

7. The method as claimed in any of the preceding claims, wherein the step of identifying (S2) the non-parametric symbols involves rotating a non-parametric symbol (13) relative to a reference non-parametric symbol.

8. The method as claimed in claim 7, wherein the rotating is in the range of 0-360 degrees.

9. The method as claimed in any of the preceding claims, wherein the step of identifying (S2) the non-parametric symbols (13) involves scaling a non-parametric symbol (13) relative to a reference non-parametric symbol.

10. The method as claimed in claim 9, wherein the scaling is in the range of 50-200 %.

11. The method as claimed in any of the preceding claims, wherein in the step of identifying (S2) the non-parametric symbols (13), an occlusion limit is utilised so that matches can be found also when a non-parametric symbol (13) is occluded below the occlusion limit.

12. The method as claimed in any of the preceding claims, comprising assigning unique identifiers to the second parametric symbols (17, 19).

13. The method as claimed in any of the preceding claims, comprising generating an intermediate model of the plant topology prior to the step of generating the model (23) of the plant topology, wherein the intermediate model of the plant topology includes a connectivity matrix (21) describing connections between the objects by means of the classified second type of parametric symbols, and a coordinates table with the coordinates of the objects, and wherein the model of the plant topology is generated based on the intermediate model.

14. The method as claimed in any of the preceding claims, wherein the model (23) of the plant topology is an object oriented model.

15. A computer program for digitalising engineering documents describing a plant topology, wherein the computer program comprises computer code which, when run on a processing unit of digitalisation device, causes the digitalisation device to:
obtain a digital image (11) of the engineering documents, which digital image (11) comprises:
- a plurality of objects (13, 15), each object being one of a plurality of types of non-parametric symbols (13) which are **characterised by** multi-curve forms, each type of non-parametric symbol (13) representing a unique plant asset class, or one of a plurality of types of first parametric symbols (15) which are **characterised by** a single-curve form, each type of first parametric symbol (15) representing a unique plant asset class,
- second type of parametric symbols (17, 19) representing connections between the objects (13, 15), and
- text annotations (18) classifying and identifying each object (13, 15);
identify the non-parametric symbols (13) by comparing them with reference non-parametric symbols, and based on the identifying assign to each identified non-parametric symbol (13) a plant asset class,
determine the coordinates of the non-parametric symbols (13) in the digital image (11),
identify the first parametric symbols (15), and based on the identifying assign to each identified first parametric symbol (15) a plant asset class,
determine the coordinates of the first parametric symbols (15) in the digital image (11),
generate a search window (W) for each identified non-parametric symbol (13), wherein each search window (W) is positioned based on the coordinates of the corresponding identified non-parametric symbol (13),
assign to each identified non-parametric symbol a text annotation (18) contained in the corresponding search window (W), wherein in case there are more than one text annotations (18) within a search window (W), the assigning involves selecting that text annotation (18) contained in the search window (W) which includes a character that corresponds to the plant asset class of the corresponding non-parametric symbol (13),
generate a search window (W) for each identified first parametric symbol (15), wherein each search window (W) is positioned based on the coordinates of the corresponding identified first parametric symbol (15),
assign to each identified first parametric symbol (15) a text annotation (18) contained in the corresponding search window (W), wherein in case there are more than one text annotations (18) within a search window (W), the assigning involves selecting that text annotation (18) contained in the search window (W) which includes a character that corresponds to the plant asset class of the corresponding first parametric symbol (15),
determine connections between the objects (13, 15) by detecting the second parametric symbols (17, 19) and by determining their proximity to the objects (13, 15),
classify the second parametric symbols (17, 19), each second parametric symbol (17, 19) being classified based on the plant asset classes of the objects it connect to or based on the text annotations (18) assigned to the objects (13, 15) it connects to, and
generate a model (23) of the plant topology based on the non-parametric symbols (13), the first parametric symbols (15), the assigned text annotations (18) and the classified second parametric symbols (17, 19).

## Patentansprüche

1. Verfahren zum Digitalisieren technischer Dokumente, die eine Anlagentopologie beschreiben, wobei das Verfahren Folgendes umfasst:
Erhalten (S1) eines digitalen Bildes (11) der technischen Dokumente, wobei das digitale Bild (11) Folgendes umfasst:
- mehrere Objekte, wobei jedes Objekt eine von mehreren Arten von nicht-parametrischen Symbolen (13), die durch Mehrfachbogenformen ausgezeichnet sind, ist, wobei jede Art von nicht-parametrischen Symbolen (13) eine eindeutige Anlagenklasse repräsentiert, oder eine von mehreren Arten von ersten parametrischen Symbolen (15), die durch eine Einfachbogenform ausgezeichnet sind, ist, wobei jede Art von ersten parametrischen Symbolen (15) eine eindeutige Anlagenklasse repräsentiert,
- eine zweite Art von parametrischen Symbolen (17, 17), die Verbindungen zwischen den Objekten (13, 15) repräsentieren, und
- Textvermerke (18), die jedes Objekt (13, 15) klassifizieren und identifizieren;
Identifizieren (S2) der nicht-parametrischen Symbole (13), indem sie mit nicht-parametrischen Referenzsymbolen verglichen werden, und auf der Grundlage des Identifizierens Zuweisen einer Anlagenklasse zu jedem identifizierten nicht-parametrischen Symbol (13),
Bestimmen (S3) der Koordinaten des nicht-parametrischen Symbols (13) in dem digitalen Bild (11),
Identifizieren (S4) des ersten parametrischen Symbols (15) und auf der Grundlage des Identifizierens Zuweisen einer Anlagenklasse zu jedem identifizierten ersten parametrischen Symbol (15),
Bestimmen (S5) der Koordinaten des ersten parametrischen Symbols (15) in dem digitalen Bild (11),
Erzeugen (S6) eines Suchfensters (W) für jedes identifizierte nicht-parametrische Symbol (13), wobei jedes Suchfenster (W) auf der Grundlage der Koordinaten des entsprechenden identifizierten nicht-parametrischen Symbols (13) positioniert wird,
Zuweisen (S7) eines Textvermerks (18), der in dem entsprechenden Suchfenster (W) enthalten ist, zu jedem identifizierten nicht-parametrischen Symbol (13), wobei dann, wenn mehr als ein Textvermerk (18) in einem Suchfenster (W) vorliegt, das Zuweisen das Auswählen des Textvermerks (18), der in dem Suchfenster (W) enthalten ist, das ein Zeichen enthält, das der Anlagenklasse des entsprechenden nicht-parametrischen Symbols (13) entspricht, umfasst,
Erzeugen (S8) eines Suchfensters (W) für jedes identifizierte parametrische Symbol (15), wobei jedes Suchfenster (W) auf der Grundlage der Koordinaten des entsprechenden identifizierten parametrischen Symbols (15) positioniert wird,
Zuweisen (S9) eines Textvermerks (18), der in dem entsprechenden Suchfenster (W) enthalten ist, zu jedem identifizierten parametrischen Symbol (15), wobei dann, wenn mehr als ein Textvermerk (18) in einem Suchfenster (W) vorliegt, das Zuweisen das Auswählen des Textvermerks (18), der in dem Suchfenster (W) enthalten ist, das ein Zeichen enthält, das der Anlagenklasse des entsprechenden parametrischen Symbols (15) entspricht, umfasst,
Bestimmen (S10) von Verbindungen zwischen den Objekten (13, 15) durch Detektieren der zweiten parametrischen Symbole (17, 19) und durch Bestimmen ihrer Nähe zu den Objekten (13, 15),
Klassifizieren (S11) der zweiten parametrischen Symbole (17, 19), wobei jedes zweite parametrische Symbol (17, 19) auf der Grundlage der Anlagenklassen der Objekte (13, 15), mit denen es verbunden ist, oder auf der Grundlage der Textvermerke (18), die den Objekten (13, 15), mit denen es verbunden ist, zugewiesen ist, klassifiziert wird, und
Erzeugen (S12) eines Modells (23) der Anlagentopologie auf der Grundlage der nicht-parametrischen Symbole (13), der ersten parametrischen Symbole (15), der zugewiesenen Textvermerke (18) und der klassifizierten zweiten parametrischen Symbole.

2. Verfahren nach Anspruch 1, wobei die Schritte des Zuweisens (S7, S9) das Verwenden eines OCR-Algorithmus umfassen, um die Textvermerke (18) zu identifizieren.

3. Verfahren nach Anspruch 1 oder 2, wobei die Schritte des Identifizierens der nicht-parametrischen Symbole (13) und der ersten parametrischen Symbole (15) das Verwenden eines optischen Symbolerkennungsalgorithmus, OSR-Algorithmus, umfassen und das Detektieren der zweiten parametrischen Symbole das Verwenden eines OSR-Algorithmus umfasst.

4. Verfahren nach einem der vorhergehenden Ansprüche, wobei der Schritt des Identifizierens (S2) der nicht-parametrischen Symbole (13) ferner das Entfernen der nicht-parametrischen Symbole (13) aus dem digitalen Bild (11) enthält, wenn sie identifiziert worden sind.

5. Verfahren nach einem der vorhergehenden Ansprüche, wobei der Schritt des Identifizierens (S4) der ersten parametrischen Symbole (15) ferner das Entfernen der ersten parametrischen Symbole (15) aus dem digitalen Bild (11) enthält, wenn sie identifiziert worden sind.

6. Verfahren nach einem der vorhergehenden Ansprüche, wobei der Schritt des Bestimmens (S10) der Verbindungen das Entfernen jeweils der zweiten parametrischen Symbole (17, 19) aus dem digitalen Bild umfasst, wenn eine entsprechende Verbindung bestimmt wurde.

7. Verfahren nach einem der vorhergehenden Ansprüche, wobei der Schritt des Identifizierens (S2) der nicht-parametrischen Symbole das Drehen eines nicht-parametrischen Symbols (13) in Bezug auf ein nicht-parametrisches Referenzsymbol umfasst.

8. Verfahren nach Anspruch 7, wobei das Drehen im Bereich von 0 bis 360 Grad liegt.

9. Verfahren nach einem der vorhergehenden Ansprüche, wobei der Schritt des Identifizierens (S2) der nicht-parametrischen Symbole (13) das Skalieren eines nicht-parametrischen Symbols (13) in Bezug auf ein nicht-parametrisches Referenzsymbol umfasst.

10. Verfahren nach Anspruch 9, wobei das Skalieren im Bereich von 50 bis 200 % liegt.

11. Verfahren nach einem der vorhergehenden Ansprüche, wobei im Schritt des Identifizierens (S2) der nicht-parametrischen Symbole (13) ein Verdeckungsgrenzwert verwendet wird, so dass Übereinstimmungen auch dann gefunden werden können, wenn ein nicht-parametrisches Symbol (13) unterhalb des Verdeckungsgrenzwerts verdeckt ist.

12. Verfahren nach einem der vorhergehenden Ansprüche, das ein Zuweisen eindeutiger Kennungen zu den zweiten parametrischen Symbolen (17, 19) umfasst.

13. Verfahren nach einem der vorhergehenden Ansprüche, das das Erzeugen eines Zwischenmodells der Anlagentopologie vor dem Schritt des Erzeugens des Modells (23) der Anlagentopologie umfasst, wobei das Zwischenmodell der Anlagentopologie eine Konnektivitätsmatrix (21), die Verbindungen zwischen den Objekten mittels der klassifizierten zweiten Art von parametrischen Symbolen beschreibt, und eine Koordinatentabelle mit den Koordinaten der Objekte enthält, und das Modell der Anlagentopologie auf der Grundlage des Zwischenmodells erzeugt wird.

14. Verfahren nach einem der vorhergehenden Ansprüche, wobei das Modell (23) der Anlagentopologie ein objektorientiertes Modell ist.

15. Computerprogramm zum Digitalisieren technischer Dokumente, die eine Anlagentopologie beschreiben, wobei das Computerprogramm Computercode umfasst, der dann, wenn er auf einer Verarbeitungseinheit einer Digitalisierungsvorrichtung ausgeführt wird, die Digitalisierungsvorrichtung veranlasst zum
Erhalten eines digitalen Bildes (11) der technischen Dokumente, wobei das digitale Bild (11) Folgendes umfasst:
- mehrere Objekte (13, 15), wobei jedes Objekt eine von mehreren Arten von nicht-parametrischen Symbolen (13), die durch Mehrfachbogenformen ausgezeichnet sind, ist, wobei jede Art von nicht-parametrischen Symbolen (13) eine eindeutige Anlagenklasse repräsentiert, oder eine von mehreren Arten von ersten parametrischen Symbolen (15), die durch eine Einfachbogenform ausgezeichnet sind, ist, wobei jede Art von ersten parametrischen Symbolen (15) eine eindeutige Anlagenklasse repräsentiert,
- eine zweite Art von parametrischen Symbolen (17, 19), die Verbindungen zwischen den Objekten (13, 15) repräsentieren, und
- Textvermerke (18), die jedes Objekt (13, 15) klassifizieren und identifizieren;
Identifizieren der nicht-parametrischen Symbole (13) durch Vergleichen mit nicht-parametrischen Referenzsymbolen und auf der Grundlage des Identifizierens Zuweisen einer Anlagenklasse zu jedem identifizierten nicht-parametrischen Symbol (13),
Bestimmen der Koordinaten des nicht-parametrischen Symbols (13) in dem digitalen Bild (11),
Identifizieren des ersten parametrischen Symbols (15) und auf der Grundlage des Identifizierens Zuweisen einer Anlagenklasse zu jedem identifizierten ersten parametrischen Symbol (15),
Bestimmen der Koordinaten des ersten parametrischen Symbols (15) in dem digitalen Bild (11),
Erzeugen eines Suchfensters (W) für jedes identifizierte nicht-parametrische Symbol (13), wobei jedes Suchfenster (W) auf der Grundlage der Koordinaten des entsprechenden identifizierten nicht-parametrischen Symbols (13) positioniert wird,
Zuweisen eines Textvermerks (18), der in dem entsprechenden Suchfenster (W) enthalten ist, zu jedem identifizierten nicht-parametrischen Symbol (13), wobei dann, wenn mehr als ein Textvermerk (18) in einem Suchfenster (W) vorliegt, das Zuweisen das Auswählen des Textvermerks (18), der in dem Suchfenster (W) enthalten ist, das ein Zeichen enthält, das der Anlagenklasse des entsprechenden nicht-parametrischen Symbols (13) entspricht, umfasst,
Erzeugen eines Suchfensters (W) für jedes identifizierte parametrische Symbol (15), wobei jedes Suchfenster (W) auf der Grundlage der Koordinaten des entsprechenden identifizierten parametrischen Symbols (15) positioniert wird,
Zuweisen eines Textvermerks (18), der in dem entsprechenden Suchfenster (W) enthalten ist, zu jedem identifizierten parametrischen Symbol (15), wobei dann, wenn mehr als ein Textvermerk (18) in einem Suchfenster (W) vorliegt, das Zuweisen das Auswählen des Textvermerks (18), der in dem Suchfenster (W) enthalten ist, das ein Zeichen enthält, das der Anlagenklasse des entsprechenden parametrischen Symbols (15) entspricht, umfasst,
Bestimmen von Verbindungen zwischen den Objekten (13, 15) durch Detektieren der zweiten parametrischen Symbole (17, 19) und durch Bestimmen ihrer Nähe zu den Objekten (13, 15),
Klassifizieren der zweiten parametrischen Symbole (17, 19), wobei jedes zweite parametrische Symbol (17, 19) auf der Grundlage der Anlagenklassen der Objekte, mit denen es verbunden ist, oder auf der Grundlage der Textvermerke (18), die den Objekten (13, 15), mit denen es verbunden ist, zugewiesen ist, klassifiziert wird, und
Erzeugen eines Modells (23) der Anlagentopologie auf der Grundlage der nicht-parametrischen Symbole (13), der ersten parametrischen Symbole (15), der zugewiesenen Textvermerke (18) und der klassifizierten zweiten parametrischen Symbole (17, 19).

## Revendications

1. Procédé de numérisation de documents d'ingénierie décrivant une topologie d'usine, le procédé comportant les étapes consistant à :
obtenir (S1) une image numérique (11) des documents d'ingénierie, ladite image numérique (11) comportant :
- une pluralité d'objets, chaque objet étant d'un type parmi une pluralité de types de symboles non paramétriques (13) qui sont **caractérisés par** des formes multi-courbes, chaque type de symbole non paramétrique (13) représentant une classe unique d'actifs d'usine, ou d'un type parmi une pluralité de types de premiers symboles paramétriques (15) qui sont **caractérisés par** une forme à courbe unique, chaque type de premier symbole paramétrique (15) représentant une classe unique d'actifs d'usine,
- un deuxième type de symboles paramétriques (17, 17) représentant des liaisons entre les objets (13, 15), et
- des annotations (18) en texte classifiant et identifiant chaque objet (13, 15) ;
identifier (S2) les symboles non paramétriques (13) en les comparant à des symboles non paramétriques de référence, et d'après l'identification, affecter à chaque symbole non paramétrique (13) identifié une classe d'actifs d'usine,
déterminer (S3) les coordonnées des symboles non paramétriques (13) dans l'image numérique (11),
identifier (S4) les premiers symboles paramétriques (15),
et d'après l'identification, affecter à chaque premier symbole paramétrique (15) identifié une classe d'actifs d'usine,
déterminer (S5) les coordonnées des premiers symboles paramétriques (15) dans l'image numérique (11),
générer (S6) une fenêtre (W) de recherche pour chaque symbole non paramétrique (13) identifié, chaque fenêtre (W) de recherche étant positionnée d'après les coordonnées du symbole non paramétrique (13) identifié correspondant,
affecter (S7) à chaque symbole non paramétrique (13) identifié une annotation (18) en texte contenue dans la fenêtre (W) de recherche correspondante, l'affectation faisant intervenir, dans le cas où il existe plus d'une annotation (18) en texte à l'intérieur d'une fenêtre (W) de recherche, la sélection de l'annotation (18) en texte contenue dans la fenêtre (W) de recherche qui comprend un caractère qui correspond à la classe d'actifs d'usine du symbole non paramétrique (13) correspondant,
générer (S8) une fenêtre (W) de recherche pour chaque premier symbole paramétrique (15) identifié, chaque fenêtre (W) de recherche étant positionné d'après les coordonnées du premier symbole paramétrique (15) identifié correspondant,
affecter (S9) à chaque premier symbole paramétrique (15) identifié une annotation (18) en texte contenue dans la fenêtre (W) de recherche correspondante, l'affectation faisant intervenir, dans le cas où il existe plus d'une annotation (18) en texte à l'intérieur d'une fenêtre (W) de recherche, la sélection de l'annotation (18) en texte contenue dans la fenêtre (W) de recherche qui comprend un caractère qui correspond à la classe d'actifs d'usine du premier symbole paramétrique (15) correspondant,
déterminer (S10) des liaisons entre les objets (13, 15) en détectant les deuxièmes symboles paramétriques (17, 19) et en déterminant leur proximité par rapport aux objets (13, 15),
classifier (S11) les deuxièmes symboles paramétriques (17, 19), chaque deuxième symbole paramétrique (17, 19) étant classifié d'après les classes d'actifs d'usine des objets (13, 15) auxquels il se connecte ou d'après les annotations (18) en texte affectées aux objets (13, 15) auxquels il se connecte, et
générer (S12) un modèle (23) de la topologie d'usine d'après les symboles non paramétriques (13), les premiers symboles paramétriques (15), les annotations (18) en texte affectées et les deuxièmes symboles paramétriques classifiés.

2. Procédé selon la revendication 1, les étapes d'affectation (S7, S9) faisant intervenir l'utilisation d'un algorithme d'OCR pour identifier les annotations (18) en texte.

3. Procédé selon la revendication 1 ou 2, les étapes d'identification des symboles non paramétriques (13) et les premiers symboles paramétriques (15) faisant intervenir l'utilisation d'un algorithme de reconnaissance optique de symboles, OSR, et la détectant des deuxièmes symboles paramétriques faisant intervenir l'utilisation d'un algorithme d'OSR.

4. Procédé selon l'une quelconque des revendications précédentes, l'étape d'identification (S2) des symboles non paramétriques (13) comprenant en outre l'élimination des symboles non paramétriques (13) de l'image numérique (11) lorsqu'ils ont été identifiés.

5. Procédé selon l'une quelconque des revendications précédentes, l'étape d'identification (S4) des premiers symboles paramétriques (15) comprenant en outre l'élimination des premiers symboles paramétriques (15) de l'image numérique (11) lorsqu'ils ont été identifiés.

6. Procédé selon l'une quelconque des revendications précédentes, l'étape de détermination (S10) des liaisons faisant intervenir l'élimination de chaque deuxième symbole paramétrique (17, 19) de l'image numérique (11) lorsqu'une liaison correspondante a été déterminée.

7. Procédé selon l'une quelconque des revendications précédentes, l'étape d'identification (S2) des symboles non paramétriques faisant intervenir une rotation d'un symbole non paramétrique (13) par rapport à un symbole non paramétrique de référence.

8. Procédé selon la revendication 7, la rotation se situant dans la plage de 0 à 360 degrés.

9. Procédé selon l'une quelconque des revendications précédentes, l'étape d'identification (S2) des symboles non paramétriques (13) faisant intervenir une mise à l'échelle d'un symbole non paramétrique (13) par rapport à un symbole non paramétrique de référence.

10. Procédé selon la revendication 9, la mise à l'échelle se situant dans la plage de 50 à 200%.

11. Procédé selon l'une quelconque des revendications précédentes, une limite d'occultation étant utilisée dans l'étape d'identification (S2) des symboles non paramétriques (13), de telle façon que des correspondances puissent également être trouvées lorsqu'un symbole non paramétrique (13) est occulté en-dessous de la limite d'occultation.

12. Procédé selon l'une quelconque des revendications précédentes, comportant l'affectation d'identifiants uniques aux deuxièmes symboles paramétriques (17, 19).

13. Procédé selon l'une quelconque des revendications précédentes, comportant la génération d'un modèle intermédiaire de la topologie d'usine avant l'étape de génération du modèle (23) de la topologie d'usine, le modèle intermédiaire de la topologie d'usine comprenant une matrice (21) de connectivité décrivant des liaisons entre les objets au moyen du deuxième type classifié de symboles paramétriques, et une table de coordonnées comportant les coordonnées des objets, et le modèle de la topologie d'usine étant généré d'après le modèle intermédiaire.

14. Procédé selon l'une quelconque des revendications précédentes, le modèle (23) de la topologie d'usine étant un modèle orienté objet.

15. Programme informatique de numérisation de documents d'ingénierie décrivant une topologie d'usine, le programme informatique comportant du code informatique qui, lorsqu'il est exécuté sur une unité de traitement de dispositif de numérisation, amène le dispositif de numérisation à :
obtenir une image numérique (11) des documents d'ingénierie, ladite image numérique (11) comportant :
- une pluralité d'objets (13, 15), chaque objet étant d'un type parmi une pluralité de types de symboles non paramétriques (13) qui sont **caractérisés par** des formes multi-courbes, chaque type de symbole non paramétrique (13) représentant une classe unique d'actifs d'usine, ou d'un type parmi une pluralité de types de premiers symboles paramétriques (15) qui sont **caractérisés par** une forme à courbe unique, chaque type de premier symbole paramétrique (15) représentant une classe unique d'actifs d'usine,
- un deuxième type de symboles paramétriques (17, 19) représentant des liaisons entre les objets (13, 15), et
- annotations (18) en texte classifiant et identifiant chaque objet (13, 15) ;
identifier les symboles non paramétriques (13) en les comparant à des symboles non paramétriques de référence, et d'après l'identification, affecter à chaque symbole non paramétrique (13) identifié une classe d'actifs d'usine,
déterminer les coordonnées des symboles non paramétriques (13) dans l'image numérique (11),
identifier les premiers symboles paramétriques (15), et d'après l'identification, affecter à chaque premier symbole paramétrique (15) identifié une classe d'actifs d'usine,
déterminer les coordonnées des premiers symboles paramétriques (15) dans l'image numérique (11),
générer une fenêtre (W) de recherche pour chaque symbole non paramétrique (13) identifié, chaque fenêtre (W) de recherche étant positionnée d'après les coordonnées du symbole non paramétrique (13) identifié correspondant,
affecter à chaque symbole non paramétrique identifié une annotation (18) en texte contenue dans la fenêtre (W) de recherche correspondante, l'affectation faisant intervenir, dans le cas où il existe plus d'une annotation (18) en texte à l'intérieur d'une fenêtre (W) de recherche, la sélection de l'annotation (18) en texte contenue dans la fenêtre (W) de recherche qui comprend un caractère qui correspond à la classe d'actifs d'usine du symbole non paramétrique (13) correspondant,
générer une fenêtre (W) de recherche pour chaque premier symbole paramétrique (15) identifié, chaque fenêtre (W) de recherche étant positionnée d'après les coordonnées du premier symbole paramétrique (15) identifié correspondant,
affecter à chaque premier symbole paramétrique (15) identifié une annotation (18) en texte contenue dans la fenêtre (W) de recherche correspondante, l'affectation faisant intervenir, dans le cas où il existe plus d'une annotation (18) en texte à l'intérieur d'une fenêtre (W) de recherche, la sélection de l'annotation (18) en texte contenue dans la fenêtre (W) de recherche qui comprend un caractère qui correspond à la classe d'actifs d'usine du premier symbole paramétrique (15) correspondant,
déterminer des liaisons entre les objets (13, 15) en détectant les deuxièmes symboles paramétriques (17, 19) et en déterminant leur proximité par rapport aux objets (13, 15),
classifier les deuxièmes symboles paramétriques (17, 19), chaque deuxième symbole paramétrique (17, 19) étant classifié d'après les classes d'actifs d'usine des objets auxquels il se connecte ou d'après les annotations (18) en texte affectées aux objets (13, 15) auxquels il se connecte, et
générer un modèle (23) de la topologie d'usine d'après les symboles non paramétriques (13), les premiers symboles paramétriques (15), les annotations (18) en texte affectées et les deuxièmes symboles paramétriques (17, 19) classifiés.
